# EUROPÄISCHE PATENTSCHRIFT

(11) **EP 4 027 043 B1**
(45) Veröffentlichungstag und Bekanntmachung des Hinweises auf die Patenterteilung: **18.10.2023**
(21) Anmeldenummer: 21217523.6
(22) Anmeldetag: 23.12.2021
(51) Int. Cl.: F16K 51/02, F16K 27/02, F16L 1/00, F04D 19/04, F04D 27/02, F16L 23/036, F16L 41/08

(54) **VAKUUMVENTIL**
VACUUM VALVE
SOUPAPE À VIDE

(43) Veröffentlichungstag der Anmeldung: 13.07.2022
(73) Patentinhaber: Pfeiffer Vacuum Technology AG, 35614 Asslar (DE)
(72) Erfinder: Schweighöfer, Michael, 35641 Schöffengrund (DE)
(74) Vertreter: Manitz Finsterwald Patent- und Rechtsanwaltspartnerschaft mbB

(56) Entgegenhaltungen:
- EP-A1- 3 540 237
- EP-A1- 3 561 350
- EP-A1- 3 617 520
- DE-A1-102019 130 157
- JP-A- H0 771 649
- JP-A- 2008 144 906
- US-B1- 6 213 153

## Beschreibung

Die vorliegende Erfindung betrifft ein System mit einem Vakuumventil, einer Turbomolekular-Vakuumpumpe und einem zwischen diesen angeordneten Dichtmittel. Das Vakuumventil weist einen Grundkörper und eine Vakuumöffnung auf, welche von einer Dichtfläche für ein Dichtmittel umgeben ist.

Bei einem bekannten Vakuumventil dieser Art ist die Dichtfläche an der vom Vakuumventil weg gerichteten Vorderseite eines Flansches ausgebildet, welcher eine von radial außen nach radial innen vom Grundkörper des Vakuumventils weggeneigte Rückseite besitzt und über ein kurzes Rohrstück mit dem Grundkörper des Vakuumventils verbunden ist. Zur vakuumdichten Verbindung dieses Vakuumventils mit einem anderen Vakuumbauteil besitzt üblicherweise auch das andere Vakuumbauteil einen identisch ausgebildeten Flansch, sodass die Flansche zum Beispiel mittels eines Spannrings miteinander verbunden werden können. Hierfür werden üblicherweise ein Zentrierring und ein Dichtmittel zwischen die beiden Dichtflächen gebracht und der Spannring, welcher zwei gegenüberliegende von radial außen nach radial innen vom Grundkörper des jeweiligen Vakuumbauteils weg geneigte Innenseiten besitzt, um die beiden Flansche gelegt, sodass die beiden Innenseiten des Spannrings an den beiden Rückseiten der Flansche anliegen. Wird der Spannring nun verschraubt, oder anderweitig zugezogen, üben die Innenseiten des Spannrings Druck auf die Rückseiten der Flansche aus, wodurch die Dichtflächen auf das Dichtmittel gepresst werden und eine vakuumdichte Verbindung entsteht.

In der Vakuumtechnik hat sich zur Verbindung von Vakuumventilen mit anderen Vakuumbauteilen der ISO-genormte Kleinflansch (ISO-KF) etabliert, welcher nach dem oben beschriebenen Prinzip funktioniert. Da es hierbei notwendig ist, dass der Spannring an der Rückseite der Flansche greift, müssen diese in einigem Abstand zum Grundkörper des Vakuumventils an einem kurzen Rohrstück ausgebildet sein. Um dies zu realisieren, kann das Vakuumventil samt Rohrstück mit Flansch aus einem einzigen Ausgangsteil gefertigt werden. Dieses Ausgangsteil muss jedoch aufgrund des hervorstehenden Flansches wesentlich größer als der Grundkörper des Vakuumventils selbst sein und unter großen Materialverlusten aufwendig und kostenintensiv zerspant werden. Eine weitere Möglichkeit besteht darin den Grundkörper des Vakuumventils einerseits und das Rohrstück samt Flansch andererseits separat zu fertigen und im Nachhinein zu verbinden, was jedoch einen weiteren Arbeitsschritt und potentielle Leckstellen verursacht. Ein weiterer Nachteil der beschriebenen Art der Verbindung von Vakuumventilen mit anderen Vakuumbauteilen ist, dass die Verbindung selbst immer eine gewisse Mindestbaugröße aufweist. Dies ist zum einen bei begrenzten Platzverhältnissen von Nachteil, bedeutet aber auch, dass immer ein gewisser Hebel gegeben ist, an welchem eine Kraft radial zur Verbindungsachse angreifen kann, wodurch die Gefahr besteht, dass die vakuumdichte Verbindung gebrochen wird.

Aus der JP 2008 144906 A ist ein System mit den Merkmalen gemäß dem Oberbegriff des Anspruchs 1 bekannt.

Der Erfindung liegt die Aufgabe zugrunde, ein System mit einem kostenoptimierten, einfach herzustellenden Vakuumventil bereitzustellen, welches sich platzsparend mit einer Turbomolekular-Vakuumpumpe verbinden lässt.

Die Aufgabe wird gelöst durch ein System mit den Merkmalen des Anspruchs 1.

Das System umfasst ein Vakuumventil, eine Turbomolekular-Vakuumpumpe und ein zwischen dem Vakuumventil und der Turbomolekular-Vakuumpumpe angeordnetes Dichtmittel.

Das Vakuumventil weist einen Grundkörper und eine Vakuumöffnung auf, welche von einer Dichtfläche für ein Dichtmittel umgeben ist. Die Vakuumöffnung und die Dichtfläche sind direkt an dem Grundkörper ausgebildet, und wenigstens ein Befestigungsmittel ist an dem Grundkörper ausgebildet, welches zur Befestigung eines mit dem Vakuumventil vakuumdicht zu verbindenden weiteren Vakuumbauteils dient.

Das Vakuumventil ist ein Vorvakuumventil für die Turbomolekular-Vakuumpumpe. Gemäß einem nicht beanspruchten Beispiel kann das Vakuumventil ein Ventil zum Absperren einer Vakuumkammer oder ein Ventil zum Absperren eines Mehrkammersystems sein.

Durch das Vakuumventil, welches sowohl als Inlineventil als auch als Eckventil ausgebildet sein kann, werden die genannten Nachteile des Standes der Technik überwunden, indem die Vakuumöffnung und die Dichtfläche direkt am Grundkörper des Vakuumventils ausgebildet sind und die Turbomolekular-Vakuumpumpe, unter Verwendung des Befestigungsmittels und unter Zwischenschaltung eines Dichtmittels direkt an dem Vakuumventil befestigt wird. Da die Turbomolekular-Vakuumpumpe keinen Flansch aufweist, lassen sich das Vakuumventil und die Turbomolekular-Vakuumpumpe ohne

Abstand zwischen ihren Grundkörpern und folglich mit minimalem Platzbedarf aneinander montieren.

Die Turbomolekular-Vakuumpumpe weist erfindungsgemäß einen Grundkörper und eine Vakuumöffnung auf, welche von einer Dichtfläche für ein Dichtmittel umgeben ist, wobei die Vakuumöffnung und die Dichtfläche direkt an dem Grundkörper der Turbomolekular-Vakuumpumpe ausgebildet sind und wenigstens ein Befestigungsmittel in dem Grundkörper der Turbomolekular-Vakuumpumpe ausgebildet ist, welches zur Befestigung des Vakuumventils dient.

Das Vakuumventil kann derart eng an der Turbomolekular-Vakuumpumpe montiert werden, dass die Grundkörper aneinander anliegen. So kann an dem Vakuumventil auch eine Steuerungseinheit vorgesehen sein, welche die Antriebs- und/oder Steuerelektronik für das Vakuumventil samt elektrischer Kontakte umfasst, die beispielsweise an einem Steckverbinder ausgebildet sind, welcher derart ausgestaltet und positioniert ist, dass er bei der Montage des Vakuumventils an der Vakuumpumpe direkt mit einem entsprechend an der Vakuumpumpe vorgesehenen Steckverbinder in Eingriff gerät. Auf diese Weise kann eine Antriebs- und/oder Steuerelektronik der Vakuumpumpe über eine Steckverbindung direkt mit der Antriebs- und/oder Steuerelektronik des Vakuumventils verbunden werden und das Vakuumventil direkt über die Vakuumpumpe angesteuert werden. Besonders vorteilhaft ist eine direkte Ansteuerung des Vakuumventils über die Vakuumpumpe dann, wenn die Vakuumpumpe eine Turbomolekular-Vakuumpumpe ist. In diesem Fall kann die Antriebs- und/oder Steuerelektronik der Vakuumpumpe durch eine PVM Modulation die mittlere Spannung nach dem Schalten des Vakuumventils absenken. Hierdurch kann Energie eingespart und die Leistungsaufnahme nach dem Schaltvorgang und somit die Erwärmung reduziert werden.

Weiterbildungen der Erfindung sind den abhängigen Ansprüchen, der Beschreibung und der Zeichnung zu entnehmen.

Gemäß einer Ausführungsform ist die Dichtfläche in einer Vertiefung des Grundkörpers ausgebildet. Insbesondere kann die Dichtfläche den Boden einer Vertiefung des Grundkörpers bilden. Besonders vorteilhaft ist es dabei, wenn die Vertiefung an die Abmessungen des Dichtmittels angepasst ist, sodass die Grundkörper des Vakuumventils und eines weiteren Vakuumbauteils bündig miteinander verbunden werden können.

Gemäß einer weiteren Ausführungsform weist der Grundkörper eine Senkung zur Aufnahme eines Zentrierrings auf. An diesem kann zum einen das Dichtmittel befestigt werden, zum anderen erleichtert er die passgenaue Verbindung der Vakuumbauteile.

Gemäß noch einer weiteren Ausführungsform umfasst das wenigstens eine Befestigungsmittel ein in der Vakuumöffnung ausgebildetes Innengewinde. Ein solches Befestigungsmittel ermöglicht das Einschrauben von verschiedenen Anschlussstücken, wie zum Beispiel Push-In- oder Schlauchnippelverbindern, wodurch das Vakuumventil selbst als Adapter fungieren kann.

Gemäß einer anderen Ausführungsform umfasst das wenigstens eine Befestigungsmittel mehrere um die Dichtfläche herum angeordnete Bohrungen.

Zumindest eine der Bohrungen kann ein Innengewinde aufweisen und/oder sich vollständig durch den Grundkörper hindurch erstrecken.

Besonders vorteilhaft ist es dabei, wenn die Position einer sich vollständig durch den Grundkörper hindurch erstreckenden Bohrung des Vakuumventils an die Position einer mit einem Innengewinde versehenen Bohrung eines weiteren Vakuumbauteils angepasst ist, sodass diese mithilfe einer Schraube miteinander verbunden werden können.

Gemäß einer weiteren Ausführungsform ist die Dichtfläche an einen KF-Anschluss nach DIN 28403 und ISO 2861 angepasst. Somit kann ein weiteres Vakuumbauteil, dessen Dichtfläche an einem entsprechend spezifizierten Flansch ausgebildet ist, vakuumdicht mit dem Vakuumventil verbunden werden, indem der Flansch zum Beispiel mithilfe eines Klemmelements oder einer Pratze an dem Vakuumventil befestigt wird. Dies hat den Vorteil, dass das Vakuumventil kompatibel zu konventionellen Vakuumbauteilen ist.

Gemäß einer Weiterbildung des Systems sind wenigstens ein elektrischer Kontakt des Vakuumventils und wenigstens ein elektrischer Kontakt des Vakuumbauteils derart ausgebildet und positioniert, dass sie in Kontakt geraten, sobald das Vakuumventil und das Vakuumbauteil vakuumdicht miteinander verbunden werden. Da das Vakuumventil und die Turbomolekular-Vakuumpumpe so miteinander verbunden werden können, dass kein Abstand zwischen ihren Grundkörpern besteht, kann man vorteilhafterweise auch die jeweiligen Antriebs- und/oder Steuerelektroniken so positionieren und ausgestalten, dass die elektrischen Kontakte des Vakuumventils, welche beispielsweise an einem Stecker ausgebildet sein können, direkt mit den elektrischen Kontakten der Turbomolekular-Vakuumpumpe, welche beispielsweise an einer Buchse ausgebildet sein können, in Kontakt geraten, sobald das Vakuumventil und das Vakuumbauteil vakuumdicht miteinander verbunden werden, ohne dass ein zusätzlicher Verbinder, wie zum Beispiel ein Kabel, benötigt wird.

Gemäß einer nicht erfindungsgemäßen Ausführungsform des Systems kann die Turbomolekular-Vakuumpumpe einen Flansch, insbesondere einen KF-Anschluss nach DIN 28403 und ISO 2861, zur Verbindung mit dem Vakuumventil aufweisen, wobei der Flansch eine eine Dichtfläche ausbildende Vorderseite und eine davon abgewandte Rückseite besitzt.

In diesem Fall kann das nicht erfindungsgemäße System ein, insbesondere kreisbogenförmiges, Klemmelement mit mindestens einem, dem wenigstens einem Befestigungsmittel des Vakuumventils zugeordneten Befestigungsauge umfassen. Durch das Klemmelement kann der Flansch der Turbomolekular-Vakuumpumpe mit dem Grundkörper des Vakuumventils verbunden werden.

Gemäß einer Weiterbildung des nicht erfindungsgemäßen Systems weist das Klemmelement eine dem Vakuumventil zugewandte Kontaktfläche zur Anlage an der Rückseite des Flansches des Vakuumbauteils auf. Über diese Kontaktfläche kann das Klemmelement Druck auf die Rückseite des Flansches ausüben, wodurch die Dichtfläche des Flansches gegen ein zwischen den Dichtflächen angeordnetes Dichtmittel und dieses gegen die Dichtfläche des Vakuumventils gepresst wird, um eine vakuumdichte Verbindung herzustellen.

Die Kontaktfläche des Klemmelements kann von radial außen nach radial innen vom Grundkörper weg geneigt sein, insbesondere kann die Neigung der Kontaktfläche an eine Neigung der Rückseite des Flansches, insbesondere des KF-Anschlusses nach DIN 28403 und ISO 2861, angepasst sein. Durch die an die Neigung der Rückseite des Flansches angepasste Neigung der Kontaktfläche des Klemmelements lässt sich erreichen, dass ein Anpressdruck der beiden Dichtflächen auf das Dichtmittel nicht nur durch eine Kraft auf das Klemmelement axial zur Verbindungsrichtung in Richtung des Grundkörpers des Vakuumventils, sondern auch durch eine Kraft radial nach innen auf das Klemmelement erzeugt werden kann.

Gemäß einer weiteren Ausführungsform des nicht erfindungsgemäßen Systems weist das Klemmelement zwei Befestigungsaugen auf, wobei eines der Befestigungsaugen eine vollumfänglich abgeschlossene Bohrung und das andere Befestigungsauge eine radial teilweise offene Bohrung ist. Dadurch ist es möglich, das Klemmelement um beispielsweise eine erste Schraube zu verschwenken, welche durch das erste Befestigungsauge geführt und in eine erste Bohrung im Grundkörper des Vakuumventils eingeschraubt ist, ohne dass eine durch das zweite Befestigungsauge geführte und in eine zweite Bohrung im Grundkörper des Vakuumventils eingeschraubte zweite Schraube entfernt werden muss. Dies ermöglicht ein besonders schnelles und einfaches Lösen bzw. Befestigen des Vakuumbauteils von bzw. an dem Vakuumventil.

Nachfolgend wird die Erfindung unter Bezugnahme auf die Zeichnung rein beispielhaft anhand verschiedener Ausführungsformen beschrieben.
- Fig. 1: zeigt eine perspektivische Ansicht eines Vakuumventils.
- Fig. 2: zeigt eine perspektivische Ansicht einer Turbomolekular-Vakuumpumpe.
- Fig. 3: zeigt ein erfindungsgemäßes System mit der Turbomolekular-Vakuumpumpe von Fig. 2 mit dem daran befestigten Vakuumventil von Fig. 1.
- Fig. 4: zeigt eine perspektivische Ansicht des Vakuumventils von Fig. 1 mit einem daran befestigten KF-Anschluss und einem Push-In Verbinder.
- Fig. 5: zeigt das Vakuumventil von Fig. 4 aus einer anderen Perspektive.
- Fig. 6: zeigt das Vakuumventil von Fig. 4 im Schnitt.

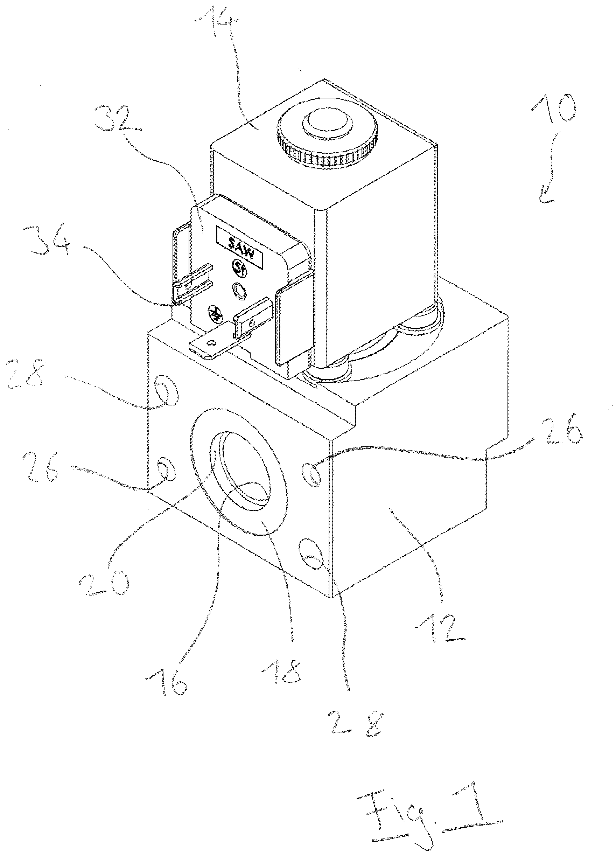

Fig. 1 zeigt ein Vakuumventil 10, das ein Vorvakuumventil für eine Turbomolekular-Vakuumpumpe (30) ist und einen Grundkörper 12 sowie eine Steuerungseinheit 14 aufweist.

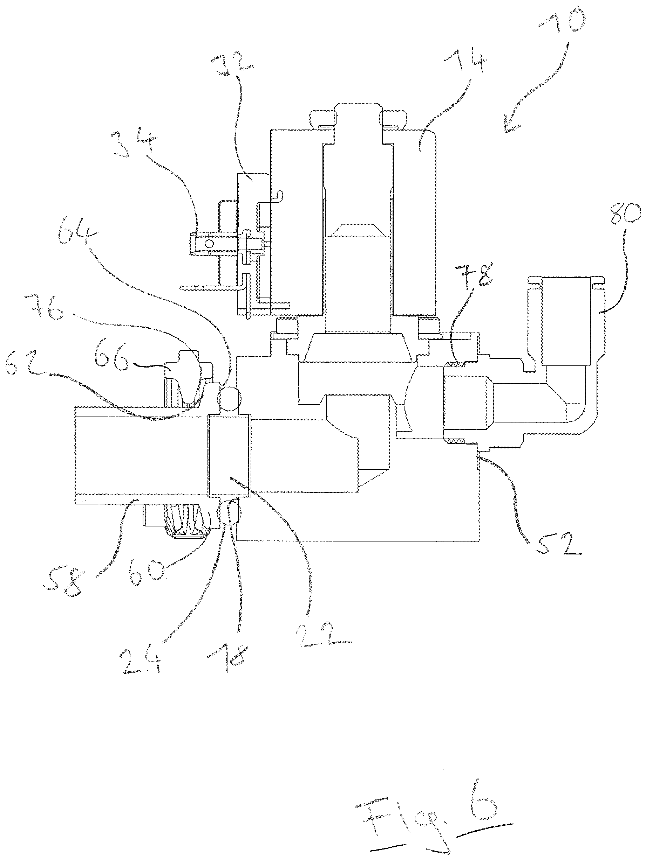

An einer Vorderseite des Grundkörpers 12 befindet sich eine Vakuumöffnung 16, welche von einer Dichtfläche 18 umgeben ist, die an einen KF-Flansch nach DIN 28403 und ISO 2861 angepasst sein kann. Genauer gesagt bildet die Dichtfläche 18 den Boden einer kreisringförmigen Vertiefung des Grundkörpers 12. Ein innerer Rand der Dichtfläche 18 ist durch eine Senkung 20 definiert, die sich von der Vakuumöffnung 16 ausgehend in den Grundkörper 12 hineinerstreckt und zur Aufnahme eines Zentrierrings 22 dient, welcher ein Dichtmittel, zum Beispiel in Form eines O-Rings 24, trägt, welches an der Dichtfläche 18 anliegen soll (Fig. 6).

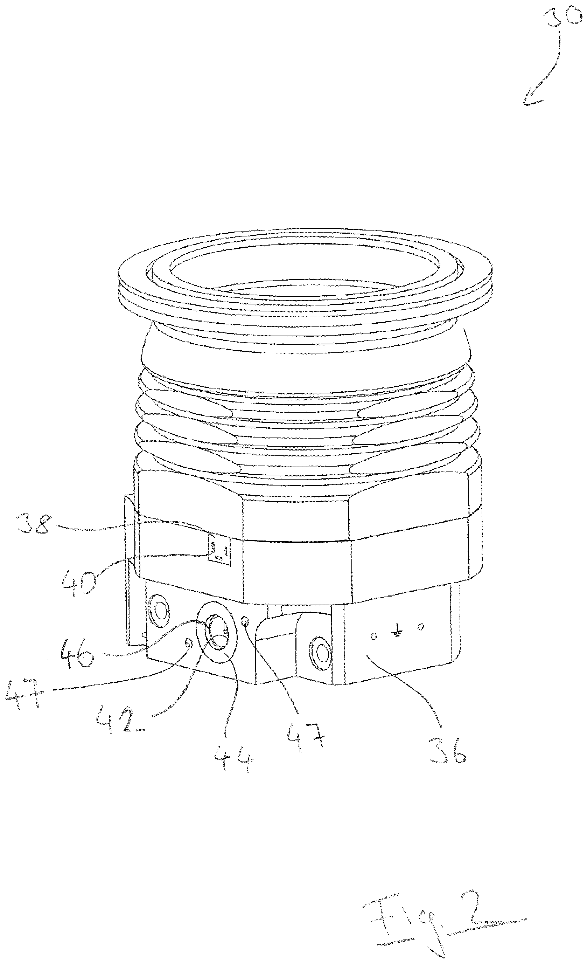

Um die Dichtfläche 18 herum sind mehrere Bohrungen 26, 28 angeordnet, im vorliegenden Ausführungsbeispiel vier Bohrungen 26, 28, welche zur Befestigung des Vakuumventils 10 an einem weiteren Vakuumbauteil dienen, beispielsweise an einer Turbomolekular-Vakuumpumpe 30 (Fig.2). Zwei der Bohrungen 26 sind dabei mit einem Innengewinde versehen, während die zwei anderen Bohrungen 28 Durchgangsbohrungen sind, die sich vollständig durch den Grundkörper 12 hindurch erstrecken. Die Bohrungen 26, 28 sind in den Ecken eines Vierecks angeordnet, in dessen Zentrum die Vakuumöffnung 16 liegt. Dabei liegen die Gewindebohrungen 26 einerseits und die Durchgangsbohrungen 28 andererseits jeweils einander diagonal gegenüber.

Die Steuerungseinheit 14 umfasst eine Antriebs- und/oder Steuerelektronik sowie einen Steckverbinder 32 mit dazugehörigen elektrischen Kontakten 34, welche in die gleiche Richtung weisen wie die Vakuumöffnung 16. Der Steckverbinder 32 ist mit anderen Worten dem mit dem Vakuumventil 10 zu verbindenden weiteren Vakuumbauteil zugewandt.

Fig. 2 zeigt eine Turbomolekular-Vakuumpumpe 30 mit einem Grundkörper 36, in welchem eine Antriebselektronik ausgebildet ist, die einen Steckverbinder 38, insbesondere einen zu dem Steckverbinder 32 des Vakuumventils 10 komplementären Steckverbinder 38, mit elektrischen Kontakten 40 umfasst.

Des Weiteren ist in dem Grundkörper 36 eine Vakuumöffnung 42 ausgebildet, welche von einer Dichtfläche 44 umgeben ist, die den Boden einer ringförmigen Vertiefung des Grundkörpers 36 bildet und die an einen KF-Flansch nach DIN 28403 und ISO 2861 angepasst sein kann. Ein innerer Rand der Dichtfläche 44 ist durch eine Senkung 46 definiert, die sich ausgehend von der Vakuumöffnung 42 in den Grundkörper 36 hineinerstreckt und zur Aufnahme eines Zentrierrings 22 dient, welcher ein Dichtmittel, zum Beispiel in Form eines O-Rings 24, trägt, welches an der Dichtfläche 44 anliegen soll (Fig. 6).

Um die Dichtfläche herum sind mehrere Bohrungen 47 angeordnet, im vorliegenden Ausführungsbeispiel zwei Bohrungen 47, welche jeweils ein Innengewinde aufweisen und zur Befestigung des Vakuumventils 10 dienen. Die Bohrungen 47 sind entsprechend den Durchgangsbohrungen 28 des Vakuumventils auf gegenüberliegenden Seiten der Vakuumöffnung 42 angeordnet.

Der Steckverbinder 38 mitsamt den elektrischen Kontakten 40 weist in die gleiche Richtung wie die Vakuumöffnung 42 und ist derart positioniert, dass er mit dem Steckverbinder 32 des Vakuumventils 10 in Eingriff treten kann, wenn das Vakuumventil 10 an der Turbomolekular-Vakuumpumpe 30 befestigt wird.

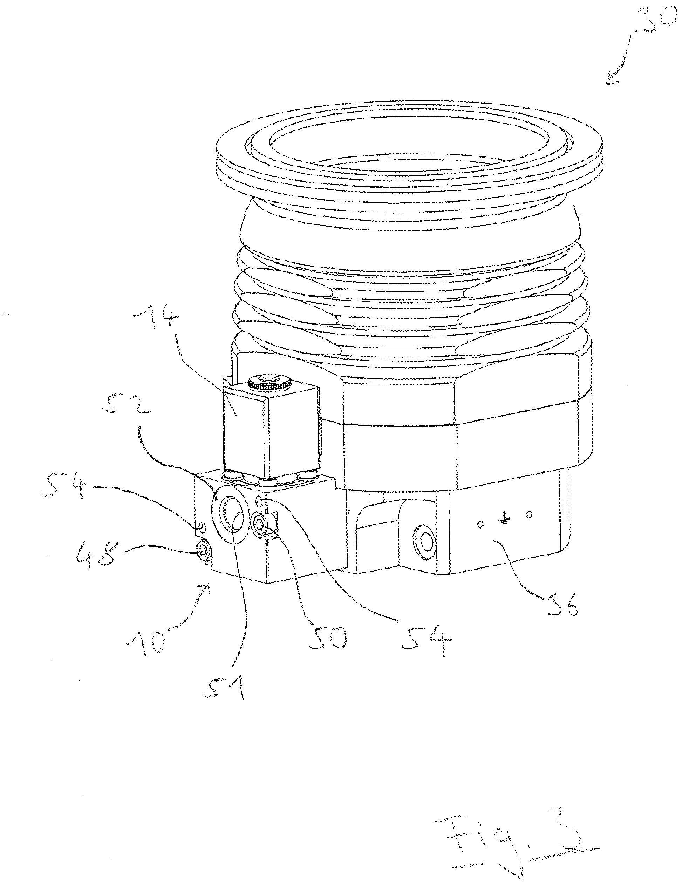

Fig. 3 zeigt die Turbomolekular-Vakuumpumpe 30 von Fig. 2, an welcher erfindungsgemäß das Vakuumventil 10 von Fig. 1 angebracht ist. Das Vakuumventil 10 ist derart an der Turbomolekular-Vakuumpumpe 30 angeordnet, dass die jeweiligen Vakuumöffnungen einander zuweisen, und mittels zweier Schrauben 48, 50, die durch die Durchgangsbohrungen 28 des Vakuumventils 10 hindurchgeführt und in die Gewindebohrungen 47 der Turbomolekular-Vakuumpumpe 30 eingeschraubt sind, an dieser befestigt. Zwischen dem Vakuumventil und der Turbomolekular-Vakuumpumpe 30 ist ein die Vakuumöffnungen umgebendes Dichtmittel angeordnet, welches mit den Dichtflächen 18, 44 des Vakuumventils 10 und der Turbomolekular-Vakuumpumpe 30 in Kontakt steht und durch diese zusammengedrückt wird, wodurch eine vakuumdichte Verbindung des Vakuumventils 10 mit der Turbomolekular-Vakuumpumpe 30 erreicht wird.

Da es die Ausbildung der Dichtflächen 18 an dem Grundkörper 12 des Vakuumventils 10 erlaubt, dieses ohne Abstand an der Turbomolekular-Vakuumpumpe 30 zu montieren, kann der Steckverbinder 32 des Vakuumventils 10 direkt in den Steckverbinder 38 der Turbomolekular-Vakuumpumpe 30 eingreifen, um die elektrischen Kontakte 34, 40 in Kontakt zu bringen. So kann das Vakuumventil 10 direkt über die Antriebselektronik der Turbomolekular-Vakuumpumpe 30 angesteuert werden.

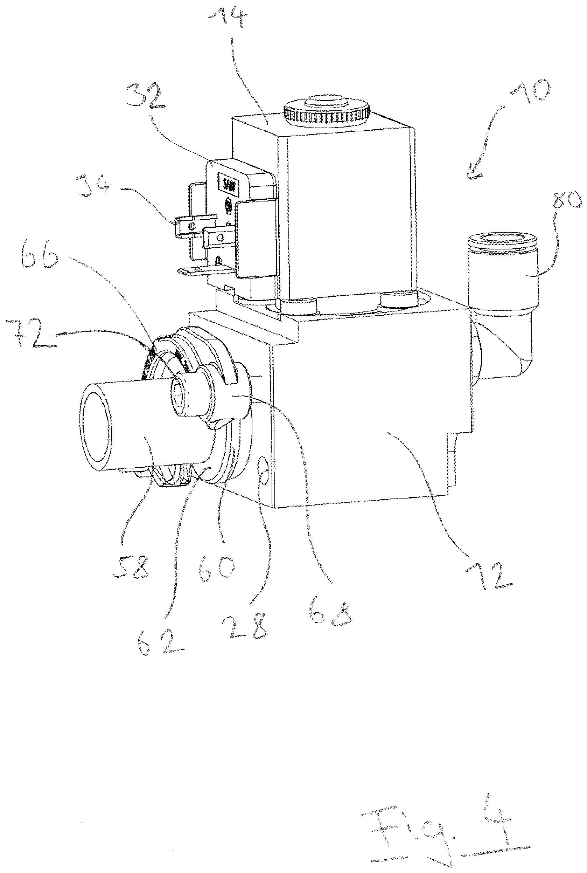

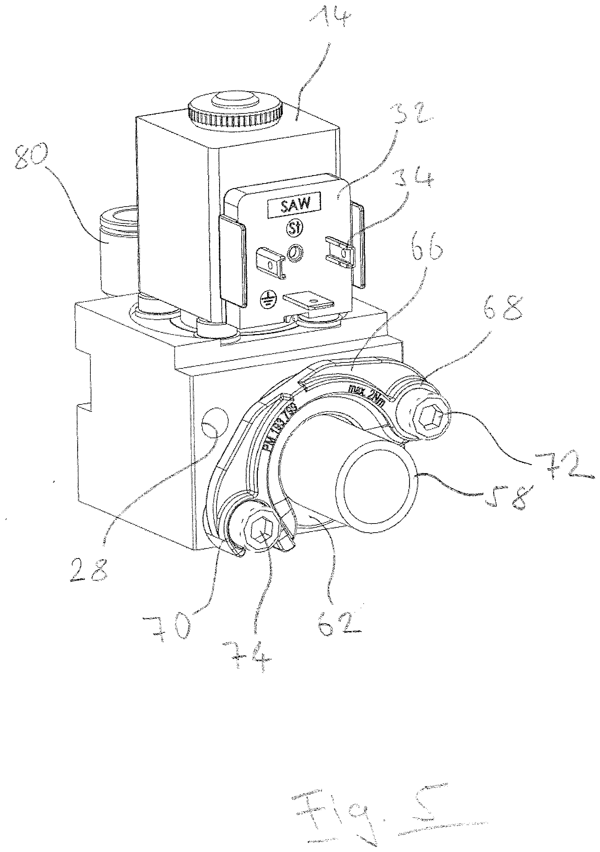

An einer der Vorderseite des Grundkörpers 12 abgewandten Rückseite des Vakuumventils 10 sind ebenfalls eine eine Vakuumöffnung 51 umgebende Dichtfläche 52 sowie zwei auf gegenüberliegenden Seiten der Vakuumöffnung 51 angeordnete Gewindebohrungen 54 ausgebildet, welche zur Befestigung eines weiteren Vakuumbauteils verwendet werden können. Die Vakuumöffnung 51 ist außerdem mit einem Innengewinde 78 versehen, in welches ein Push-In-Verbinder 80 eingeschraubt werden kann, wie es in Fig. 4 bis 6 dargestellt ist.

Fig. 4 bis 6 zeigen das Vakuumventil 10 von Fig. 1 mit einem daran befestigten Rohrstück 58, an dessen Ende ein Flansch 60 ausgebildet ist, beispielsweise ein KF-Flansch nach DIN 28403 und ISO 2861. Der Flansch 60 besitzt eine dem Vakuumventil 10 abgewandte, von radial innen nach radial außen dem Vakuumventil 10 zugeneigte Rückseite 62 und eine dem Vakuumventil 10 zugewandte Dichtfläche 64, welche an die Dichtfläche 18 des Vakuumventils 10 angepasst ist. Zwischen der Dichtfläche 64 des Flansches 60 und der Dichtfläche 18 des Vakuumventils 10 ist ein Dichtmittel in Form eines O-Rings 24 angeordnet, welcher an einem Zentrierring 22 befestigt ist (Fig. 6).

Zur Sicherung des Flansches 60 an dem Vakuumventil 10 ist ein Klemmelement 66 vorgesehen. Das Klemmelement 66 ist kreisbogenförmig ausgebildet und weist zwei Befestigungsaugen 68, 70 auf, durch welche zwei Schrauben, 72, 74 geführt sind, die zur Befestigung des Klemmelements 66 und somit des Flansches 62 an dem Grundkörper 12 des Vakuumventils 10 in die Gewindebohrungen 54 des Vakuumventils 10 eingeschraubt sind.

Das eine Befestigungsauge 70 ist als radial teilweise offene Bohrung ausgeführt, damit das Klemmelement 66 um die durch das andere Befestigungsauge 68 geführte Schraube 72 aufgeschwenkt werden kann, ohne dabei die dem einen Befestigungsauge 70 zugeordnete Schraube 74 vollständig aus ihrer Gewindebohrung 54 herausschrauben zu müssen. In der aufgeschwenkten Position gibt das Klemmelement 66 den Flansch 60 frei, sodass das Vakuumventil 10 und das Rohrstück 58 voneinander getrennt werden können.

Im den Flansch 60 sichernden Zustand, d.h. wenn das Klemmelement 66 den Flansch 60 überdeckt und mittels beider Schrauben 72, 74 an das Vakuumventil 10 fest angeschraubt ist, übt eine an dem Klemmelement 66 ausgebildete Kontaktfläche 76 eine Kraft auf die Rückseite 62 des Flansches 60 aus, durch welche die Dichtfläche 64 des Flansches 60 gegen den O-Ring 24 und dieser gegen die Dichtfläche 18 des Vakuumventils 10 gedrückt wird, um eine vakuumdichte Verbindung zwischen dem Rohrstück 58 und dem Vakuumventil zu ermöglichen.

### Bezugszeichenliste

- 10: Vakuumventil
- 12: Grundkörper
- 14: Steuerungseinheit
- 16: Vakuumöffnung
- 18: Dichtfläche
- 20: Senkung
- 22: Zentrierring
- 24: O-Ring
- 26: Bohrung
- 28: Bohrung
- 30: Turbomolekular-Vakuumpumpe
- 32: Steckverbinder
- 34: elektrischer Kontakt
- 36: Grundkörper
- 38: Steckverbinder
- 40: elektrischer Kontakt
- 42: Vakuumöffnung
- 44: Dichtfläche
- 46: Senkung
- 47: Bohrung
- 48: Schraube
- 50: Schraube
- 51: Vakuumöffnung
- 52: Dichtfläche
- 54: Bohrung
- 58: Rohrstück
- 60: Flansch
- 62: Rückseite des Flansches
- 64: Dichtfläche
- 66: Klemmelement
- 68: Befestigungsauge
- 70: Befestigungsauge
- 72: Schraube
- 74: Schraube
- 76: Kontaktfläche
- 78: Innengewinde
- 80: Push-In Verbinder

## Patentansprüche

1. System mit einem Vakuumventil (10), einer Turbomolekular-Vakuumpumpe (30) und einem zwischen der Turbomolekular-Vakuumpumpe (30) und dem Vakuumventil (10) angeordneten Dichtmittel (24),
wobei das Vakuumventil (10) ein Vorvakuumventil für die Turbomolekular-Vakuumpumpe (30) ist,
wobei das Vakuumventil (10) einen Grundkörper (12) und eine Vakuumöffnung (16, 51) aufweist, welche von einer Dichtfläche (18, 52) für das Dichtmittel (24) umgeben ist,
wobei die Vakuumöffnung (16, 51) und die Dichtfläche (18, 52) direkt an dem Grundkörper (12) ausgebildet sind und wenigstens ein Befestigungsmittel (26, 28, 78) in dem Grundkörper (12) ausgebildet ist, welches zur Befestigung der mit dem Vakuumventil (10) vakuumdicht verbundenen Turbomolekular-Vakuumpumpe (30) dient,
**dadurch gekennzeichnet, dass**
die Turbomolekular-Vakuumpumpe (30) einen Grundkörper (36) und eine Vakuumöffnung (42) aufweist, welche von einer Dichtfläche (44) für das Dichtmittel (24) umgeben ist, wobei die Vakuumöffnung (42) der Turbomolekular-Vakuumpumpe (30) und die Dichtfläche (44) der Turbomolekular-Vakuumpumpe (30) direkt an dem Grundkörper (36) der Turbomolekular-Vakuumpumpe (30) ausgebildet sind und wenigstens ein Befestigungsmittel (47) in dem Grundkörper (36) der Turbomolekular-Vakuumpumpe (30) ausgebildet ist, welches zur Befestigung des Vakuumventils (10) dient.

2. System nach Anspruch 1,
**dadurch gekennzeichnet, dass** die Dichtfläche (18, 52) i des Vakuumventils (10) in einer Vertiefung des Grundkörpers (12) des Vakuumventils (10) ausgebildet ist und insbesondere den Boden einer Vertiefung des Grundkörpers (12) des Vakuumventils (10) bildet.

3. System nach Anspruch 1 oder 2,
**dadurch gekennzeichnet,**
**dass** der Grundkörper (12) des Vakuumventils (10) eine Senkung (20) zur Aufnahme eines Zentrierrings (22) aufweist.

4. System nach zumindest einem der vorherigen Ansprüche,
**dadurch gekennzeichnet,**
**dass** das wenigstens eine Befestigungsmittel ein in der Vakuumöffnung (16, 51) des Vakuumventils (10) ausgebildetes Innengewinde (78) umfasst

5. System nach zumindest einem der vorherigen Ansprüche, **dadurch gekennzeichnet,**
**dass** das wenigstens eine Befestigungsmittel des Vakuumventils (10) mehrere um die Dichtfläche (18, 52) des Vakuumventils (10) herum angeordnete Bohrungen (26, 28, 54) umfasst

6. System nach Anspruch 5,
**dadurch gekennzeichnet,**
**dass** zumindest eine der Bohrungen (26, 54) ein Innengewinde aufweist und/oder dass sich zumindest eine der Bohrungen (24) vollständig durch den Grundkörper des Vakuumventils (10) hindurch erstreckt.

7. System nach zumindest einem der vorherigen Ansprüche,
**dadurch gekennzeichnet,**
**dass** wenigstens ein elektrischer Kontakt (34) des Vakuumventils (10) und wenigstens ein elektrischer Kontakt (40) der Turbomolekular-Vakuumpumpe (30) derart ausgebildet und positioniert sind, dass sie in Kontakt geraten, sobald das Vakuumventil (10) und die Turbomolekular-Vakuumpumpe (30) vakuumdicht miteinander verbunden werden.

## Claims

1. A system comprising a vacuum valve (10), a turbomolecular vacuum pump (30) and a sealing means (24) arranged between the turbomolecular vacuum pump (30) and the vacuum valve (10),
wherein the vacuum valve (10) is a fore-vacuum valve for the turbomolecular vacuum pump (30),
wherein the vacuum valve (10) comprises a base body (12) and a vacuum opening (16, 51) which is surrounded by a sealing surface (18, 52) for the sealing means (24),
wherein the vacuum opening (16, 51) and the sealing surface (18, 52) are formed directly at the base body (12) and at least one fastening means (26, 28, 78) is formed in the base body (12) and serves to fasten the turbomolecular vacuum pump (30) which is to be connected in a vacuum-tight manner to the vacuum valve (10),
**characterized in that**
the turbomolecular vacuum pump (30) has a base body (36) and a vacuum opening (42) which is surrounded by a sealing surface (44) for the sealing means (24), with the vacuum opening (42) of the turbomolecular vacuum pump (30) and the sealing surface (44) of the turbomolecular vacuum pump (30) being formed directly at the base body (36) of the turbomolecular vacuum pump (30) and at least one fastening means (47) being formed in the base body (36) of the turbomolecular vacuum pump (30) and serving to fasten the vacuum valve (10).

2. A system in accordance with claim 1,
**characterized in that**
the sealing surface (18, 52) of the vacuum valve (10) is formed in a recess of the base body (12) of the vacuum valve (10) and in particular forms the base of a recess of the base body (12) of the vacuum valve (10).

3. A system in accordance with claim 1 or 2,
**characterized in that**
the base body (12) of the vacuum valve (10) has a depression (20) for receiving a centering ring (22).

4. A system in accordance with at least one of the preceding claims, **characterized in that**
the at least one fastening means comprises an internal thread (78) formed in the vacuum opening (16, 51) of the vacuum valve (10).

5. A system in accordance with at least one of the preceding claims, **characterized in that**
the at least one fastening means of the vacuum valve (10) comprises a plurality of bores (26, 28, 54) arranged around the sealing surface (18, 52) of the vacuum valve (10).

6. A system in accordance with claim 5,
**characterized in that**
at least one of the bores (26, 54) has an internal thread and/or **in that** at least one of the bores (24) extends completely through the base body of the vacuum valve (10).

7. A system in accordance with at least one of the preceding claims, **characterized in that**
at least one electrical contact (34) of the vacuum valve (10) and at least one electrical contact (40) of the turbomolecular vacuum pump (30) are formed and positioned such that they come into contact as soon as the vacuum valve (10) and the turbomolecular vacuum pump (30) are connected to one another in a vacuum-tight manner.

## Revendications

1. Système comportant une soupape à vide (10), une pompe à vide turbomoléculaire (30) et un moyen d'étanchéité (24) disposé entre la pompe à vide turbomoléculaire (30) et la soupape à vide (10),
dans lequel
la soupape à vide (10) est une soupape à vide préliminaire pour la pompe à vide turbomoléculaire (30),
la soupape à vide (10) comprend un corps de base (12) et une ouverture à vide (16, 51) qui est entourée par une surface d'étanchéité (18, 52) pour le moyen d'étanchéité (24),
l'ouverture à vide (16, 51) et la surface d'étanchéité (18, 52) sont réalisées directement sur le corps de base (12), et au moins un moyen de fixation (26, 28, 78) est réalisé dans le corps de base (12), lequel sert à fixer la pompe à vide turbomoléculaire (30) reliée de manière étanche au vide à la soupape à vide (10),
**caractérisé en ce que**
la pompe à vide turbomoléculaire (30) comprend un corps de base (36) et une ouverture à vide (42) qui est entourée par une surface d'étanchéité (44) pour le moyen d'étanchéité (24), l'ouverture à vide (42) de la pompe à vide turbomoléculaire (30) et la surface d'étanchéité (44) de la pompe à vide turbomoléculaire (30) étant réalisées directement sur le corps de base (36) de la pompe à vide turbomoléculaire (30), et au moins un moyen de fixation (47) étant réalisé dans le corps de base (36) de la pompe à vide turbomoléculaire (30), lequel sert à fixer la soupape à vide (10).

2. Système selon la revendication 1,
**caractérisé en ce que**
la surface d'étanchéité (18, 52) de la soupape à vide (10) est réalisée dans une cavité du corps de base (12) de la soupape à vide (10) et constitue en particulier le fond d'une cavité du corps de base (12) de la soupape à vide (10).

3. Système selon la revendication 1 ou 2,
**caractérisé en ce que**
le corps de base (12) de la soupape à vide (10) présente un creux (20) destiné à recevoir une bague de centrage (22).

4. Système selon l'une au moins des revendications précédentes, **caractérisé en ce que**
ledit au moins un moyen de fixation présente un taraudage (78) réalisé dans l'ouverture à vide (16, 51) de la soupape à vide (10).

5. Système selon l'une au moins des revendications précédentes, **caractérisé en ce que**
ledit au moins un moyen de fixation de la soupape à vide (10) présente plusieurs alésages (26, 28, 54) disposés autour de la surface d'étanchéité (18, 52) de la soupape à vide (10).

6. Système selon la revendication 5,
**caractérisé en ce que**
au moins l'un des alésages (26, 54) présente un taraudage, et/ou **en ce qu'**au moins l'un des alésages (24) s'étend entièrement à travers le corps de base de la soupape à vide (10).

7. Système selon l'une au moins des revendications précédentes, **caractérisé en ce que**
au moins un contact électrique (34) de la soupape à vide (10) et au moins un contact électrique (40) de la pompe à vide turbomoléculaire (30) sont réalisés et positionnés de manière à entrer en contact dès que la soupape à vide (10) et la pompe à vide turbomoléculaire (30) sont reliées entre elles de manière étanche au vide.
